# EUROPEAN PATENT APPLICATION

(11) **EP 1 640 056 A2**
(43) Date of publication of application: **29.03.2006**
(21) Application number: 05016817.8
(22) Date of filing: 02.08.2005
(51) Int. Cl.: B01D 53/94

(54) **Exhaust gas purification system**

(30) Priority: 22.09.2004 JP 2004275480
(71) Applicant: Mazda Motor Corporation, Aki-gun, Hiroshima 735-8670 (JP)
(72) Inventor: Harada, Koichiro, Aki-gun Hiroshima 735-8670 (JP); Tsushio, Yoshinori, Aki-gun Hiroshima 735-8670 (JP); Takami, Akihide, Aki-gun Hiroshima 735-8670 (JP)
(74) Representative: Laufhütte, Dieter

(57) **Abstract**

An upstream catalyst (**3**) and a downstream catalyst (**4**) are disposed upstream of a particulate filter (**5**) in an exhaust passage of a diesel engine. The downstream catalyst (**4**) has a larger amount of support material for supporting catalytic metal than the upstream catalyst (**3**). This enhances the efficiency of oxidation reactions of HC in the catalysts to raise the temperature of exhaust gas flowing into the filter (**5**).

## Description

### BACKGROUND OF THE INVENTION

### (a) Field of the Invention

This invention relates to an exhaust gas purification system for a diesel engine.

### (b) Description of the Related Art

Exhaust gas purification systems for diesel engines are generally known in which a filter for trapping particulates in exhaust gas is disposed in an exhaust passage and an oxidation catalyst is disposed upstream of the filter in the exhaust passage. These exhaust gas purification systems use reaction heat in the oxidation catalyst to raise the temperature of the filter up to a temperature at which particulates ignite and burn in order to regenerate the filter. The regeneration of the filter is implemented, for example, by increasing the amount of hydrocarbons (HC) in exhaust gas by the control of fuel injection of the engine (post-injection carried out during the expansion stroke or exhaust stroke after the main injection at or about top dead center of the compression stroke), burning HC in the oxidation catalyst to produce reaction heat and using the produced reaction heat to heat the filter downstream of the oxidation catalyst.

As an example of exhaust gas purification systems of such kind, Japanese Unexamined Patent Publication No. 2004-162611 discloses a technique in which a plurality of honeycomb monolith supports are employed for a plurality of oxidation catalysts having different numbers of cells per unit area of the supports, respectively, and the plurality of oxidation catalysts are placed in series in the direction of flow of exhaust gas such that the number of cells is increased from upstream to downstream in the direction of flow of exhaust gas. This technique aims at solving a problem that when the fuel injection timing of the engine is retarded to raise the exhaust gas temperature, the engine fuel flammability is deteriorated to produce a large amount of soot and the produced soot is deposited on the oxidation catalysts.

To be specific, the above publication states as follows: The upstream oxidation catalyst has a low cell density to allow exhaust gas to pass at high flow rates so that soot is hard to deposit thereon. On the other hand, the downstream oxidation catalyst has a high cell density to allow exhaust gas to pass at low flow rates so that soot is easy to deposit thereon. Since, however, the flow rate of exhaust gas in the downstream oxidation catalyst is low, increase in HC in the exhaust gas produces a large amount of oxidation reaction heat of HC so that the downstream catalyst becomes likely to reach the necessary temperature for burning off soot. In this manner, the downstream catalyst can effectively work as an oxidation catalyst while preventing the deposition of soot.

If the cell density of the oxidation catalyst is low as described above, the deposition of soot on the oxidation catalyst is reduced but the amount of HC flowing through the oxidation catalyst into the filter is increased. Since in this case HC flows into the filter without being burned off by the oxidation catalyst, this means the amount of heat of HC combustion supplied from the catalyst to the filter is small, which is disadvantageous in the ignition of particulates deposited on the filter. In turn, this means that the amount of fuel supplied to the oxidation catalyst for the purpose of filter regeneration (i.e., the amount of post-injected fuel) is increased, leading to decreased fuel economy. Further, if unburned HC slipping through the oxidation catalyst is stored in the filter, it ignites to cause excessive temperature rise of the filter due to abnormal burning during burning-off of particulates, which is causes of deterioration of the catalytic metal supported on the filter and melting loss and cracks of the filter body.

### SUMMARY OF THE INVENTION

An object of the present invention is to allow the catalyst upstream of the filter to effectively work for the heating of the filter, i.e., for the burning-off of particulates, based on a different viewpoint from the cell density and thus solve the problem of HC slipping through the catalyst and in turn the problem of decrease in fuel economy.

In order to attain the above object, the present invention focused on that the ability of the oxidation catalyst to burn off HC depends on the amount of support material (active alumina and oxygen storage component) on which catalytic metal is supported. Based on this finding, the distribution of support material in the catalyst is adjusted such that exhaust gas flowing into the filter has a high temperature to facilitate the burning-off of particulates.

More specifically, the present invention is directed to an exhaust gas purification system for a diesel engine in which a filter for trapping particulates in exhaust gas from the engine is disposed in an exhaust passage of the engine and a catalyst for oxidizing HC in exhaust gas is disposed upstream of the filter in the exhaust passage. Further, in the exhaust gas purification system, the catalyst comprises a catalytic layer which is formed on the wall surfaces of each cell of a honeycomb support and contains catalytic metal, active alumina and an oxygen storage component both serving as a support material which supports the catalytic metal, and part of the catalyst downstream in the direction of flow of the exhaust gas is larger than part of the catalyst upstream in the direction of flow of the exhaust gas in terms of the amount of the support material per unit area of the wall surfaces of the cells of the honeycomb support.

With this structure, as becomes evident in the later-described example of this invention, the exhaust gas temperature at the filter entrance is increased as compared to the case where the support material is distributed uniformly over the entire length of the catalyst along the direction of flow of exhaust gas. The reason can be explained as follows.

Considering the temperatures of various parts of the catalyst when the catalyst oxidizes HC, since HC oxidation reaction heat produced at upstream part of the catalyst is transferred to downstream part thereof with the flow of exhaust gas, the downstream part of the catalyst has a higher temperature than the upstream part thereof if the amount of heat dissipated from the catalyst to the outside is small. Plainly speaking, if the exhaust gas having a temperature T flows into the catalyst, it is heated by HC oxidation reaction heat produced in the upstream part of the catalyst to raise its temperature up to T+a and the downstream part of the catalyst is in turn heated by the exhaust gas raised in temperature to have a higher temperature than the upstream part thereof. Therefore, as the downstream end of the catalyst is approached, the catalytic activity goes high and in turn the oxidation reactions of HC go up. As a result, the exhaust gas is heated by the heat of the oxidation reactions to raise its temperature, so that the exhaust gas temperature at the filter entrance becomes higher than that at the catalyst entrance.

If the support material is distributed uniformly over the entire length of the catalyst, rise in HC oxidation reactions at downstream part of the catalyst depends only on the heat transfer effect offered by the exhaust gas flow from upstream. Therefore, it cannot be expected to significantly raise the temperature of exhaust gas flowing into the filter. In the case where a large amount of heat is dissipated from the catalyst to the outside and the case where heat is dissipated from between the catalyst and the filter to the outside, it may happen that the exhaust gas temperature at the filter entrance becomes lower than that at the catalyst entrance.

In contrast, in the present invention, since upstream part of the catalyst has a small amount of support material, it has a small heat capacity and therefore is likely to raise its temperature, which is advantageous to early activation. Through the early activation of the catalyst, exhaust gas is promptly raised in temperature by heat of HC combustion at the upstream part of the catalyst. When the exhaust gas raised in temperature reaches downstream part of the catalyst, the downstream part rapidly activates the oxidation reactions of HC because of a large amount of support material. Therefore, the rate of increase in exhaust gas temperature rapidly goes up as compared to the above case where the support material is distributed uniformly. Specifically, active oxygen is released from the oxygen storage component which is a support material contained in the catalyst. Heat of combustion is produced in the process of the released active oxygen oxidizing CO in exhaust gas to CO₂. Under the influence of the heat of combustion, the oxidation of HC in exhaust gas by the action of the catalytic metal is activated to produce a large amount of heat of HC combustion. In this manner, since downstream part of the catalyst has a larger amount of support material than upstream part thereof, the temperature of exhaust gas flowing into the filter can be raised without the above problem that HC slips through the catalyst. Further, even if a large amount of heat is dissipated to the outside in the course of passage of exhaust gas through the catalyst or in the course of movement of exhaust gas from the catalyst to the filter, a decrease in the temperature of exhaust gas flowing into the filter can be lessened.

Accordingly, even when post injection is carried out, the amount of fuel injected can be reduced. Further, even when thermal energy is additionally applied to the catalyst for the purpose of promoting its activity, the amount of energy added can be reduced. In these respects, the exhaust gas purification system of the present invention is advantageous in quickly regenerating the filter while preventing an increase in fuel consumption.

The catalyst may be formed as an integral piece of the upstream part and the downstream part (in which a single catalyst includes the upstream part and downstream part so that the upstream and downstream parts of a single monolith support have different amounts of support material per unit area of the honeycomb support) or may be formed of two separate pieces consisting of upstream and downstream catalysts using separate supports, respectively. Further, the catalyst may consist of three or more parts having different amounts of support material per unit area of the honeycomb support so that the amount of support material increases in proceeding from upstream to downstream. Furthermore, the catalytic metal may be distributed so that downstream part of the catalyst has a larger amount of catalytic metal than upstream part thereof.

The catalyst may be an oxidation catalyst for exerting a catalytic action on oxidation reactions of HC or may be a lean-NOx catalyst of a NOx direct decomposition type or of a NOx storage-reduction type. The NOx direct decomposition catalyst removes NOx in exhaust gas by reducing NOx using HC as a reductant under oxygen-rich (fuel-lean) conditions. The NOx storage-reduction catalyst stores NOx in exhaust gas under oxygen-rich conditions and reduces the stored NOx under fuel-rich conditions where the oxygen concentration in exhaust gas goes down.

The oxidation catalyst is preferably a catalyst obtained by supporting a catalytic material containing alumina, an oxygen storage component, an HC adsorbent and precious metal as catalytic metal on a support, such as a honeycomb monolith support.

The lean-NOx catalyst is preferably a NOx storage-reduction catalyst obtained by supporting a catalytic material containing alumina, an oxygen storage component, a NOx storage component and catalytic metal on a support, such as a honeycomb monolith support.

The oxygen storage component may be ceria (CeO₂) or a mixed oxide containing cerium (Ce) and another one or more metals including zirconium (Zr), praseodymium (Pr) and neodymium (Nd). The HC adsorbent is preferably zeolite, more preferably β-zeolite. The precious metal may be platinum (Pt), rhodium (Rh), palladium (Pd) or iridium (Ir). Preferable NOx storage components include alkaline earth metals, such as barium (Ba), and alkaline metals, such as lithium (Li), potassium (K) or sodium (Na).

As described above, in the exhaust gas purification system of the present invention, the oxidation catalyst for oxidizing HC in exhaust gas, which is disposed upstream of the particulate filter in an exhaust passage, has a structure that part of the catalyst downstream in the direction of flow of exhaust gas has a larger amount of support material than upstream part thereof. Therefore, the exhaust gas temperature at the filter entrance can be increased as compared to the case where the support material is distributed uniformly over the entire length of the catalyst along the direction of flow of exhaust gas. This is advantageous in quickly regenerating the filter while preventing an increase in fuel consumption.

### BRIEF DESCRIPTION OF THE DRAWINGS

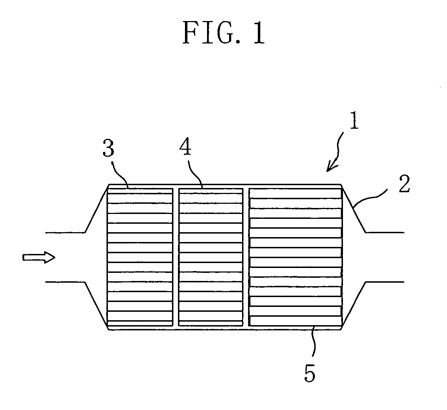

Figure 1 is a schematic view for illustrating an exhaust gas purification system according to an embodiment of the present invention.

### DETAILED DESCRIPTION OF THE INVENTION

An embodiment of the present invention will be described below in detail with reference to the drawing.

Figure **1** shows an exhaust gas purification system **1** for a diesel engine according to the embodiment of the present invention. In the figure, reference numeral **2** denotes a catalytic converter incorporated in an exhaust passage from the engine. The converter **2** includes a catalyst placed in its upstream side in the direction of flow of exhaust gas to remove HC in the exhaust gas by oxidation, and a filter **5** placed downstream of the catalyst to trap particulates in the exhaust gas. The catalyst for removing HC in the exhaust gas is divided into an upstream catalyst **3** placed toward the upstream end of the converter **2** and a downstream catalyst **4** placed downstream of the upstream catalyst **3.** Therefore, the upstream and downstream catalysts **3** and **4** and the filter **5** are arranged in series in the direction of flow of exhaust gas.

Each of the upstream and downstream catalysts **3** and **4** is made by supporting a catalytic material on the wall surfaces of each cell in a honeycomb monolith support made of ceramic or metal. The downstream catalyst **4** has a larger amount of catalytic material supported thereon, i.e., amount of support material, than the upstream catalyst **3.**

The filter **5** is a honeycomb-shaped filter made of ceramic or metal in which exhaust gas inflow cells closed at their downstream ends and exhaust gas outflow cells closed at their upstream ends are alternately arranged. Each pair of adjacent exhaust gas inflow and outflow cells are separated by a thin partition. Exhaust gas having flew into one of the exhaust gas inflow cells flows out through micro pores in the surrounding partitions into the adjacent exhaust gas outflow cells. Particulates in the exhaust gas adheres to the wall surfaces of the exhaust gas passages (including the exhaust gas inflow cells, the exhaust gas outflow cells and micro pores). Each of the wall surfaces of the exhaust gas passages is formed with a catalytic layer for promoting burning-off of particulates during regeneration of the filter **5.**

Under engine operating conditions in which the temperature of exhaust gas from the engine is high, the filter **5** is likely to be heated up to the regeneration temperature which allows burning-off of particulates by oxidation reaction heat of HC in the upstream and downstream catalysts **3** and **4.** In this case, the filter **5** can be continuously regenerated. NO in exhaust gas is oxidized into NO₂ by the upstream and downstream catalysts **3** and **4** and the produced NO₂ is supplied to the filter **5.** Therefore, the produced NO₂ effectively acts as an oxidant for particulates during the filter regeneration.

Forced regeneration of the filter **5** is implemented by controlling the fuel injection of the engine to inject fuel into an engine cylinder during the expansion stroke or exhaust stroke after the main injection at or about top dead center of the compression stroke, i.e., carry out "post injection". In this manner, a large amount of unburned fuel, i.e., HC, is supplied to the catalysts **3** and **4** to increase the amount of HC oxidation reaction heat generated in the catalysts **3** and **4** and thereby heat the filter **5** up to the regeneration temperature. Further, when the temperature of the catalysts **3** and **4** is low, the fuel injection timing of the engine is previously retarded to raise the exhaust gas temperature. Thus, the catalysts **3** and **4** are heated to reach their active temperatures.

The usefulness of the present invention will be described below with reference to examples of the present invention and comparative examples.

### Catalysts of Examples and Comparative examples

### - Example 1 -

Both the upstream catalyst **3** and the downstream catalyst **4** are oxidation catalysts. The catalytic material is made of active alumina, CeO₂ serving as an oxygen storage component, β-zeolite serving as an HC adsorbent and platinum (Pt) serving as a catalytic metal. Each catalyst was made by mixing active alumina, CeO₂ and β-zeolite in a mass ratio of 1:1:1 to prepare a support material and supporting Pt on the support material. As a support for each of the upstream and downstream catalysts **3** and **4** was used a cordierite honeycomb support having 400 cells per square inch (approximately 6.54cm²), 4 mil (approximately 0.1mm) inter-cell wall thickness and 12.5cm³ volume.

Further, for the upstream catalyst **3,** the support material obtained by mixing active alumina, CeO₂ and β-zeolite in a mass ratio of 1:1:1 was supported by 60g/L on the honeycomb support. For the downstream catalyst **4,** the same support material was supported by 180 g/L on the honeycomb support. Therefore, the downstream catalyst **4** contains a larger amount of support material per unit area of wall surfaces of each cell in the honeycomb support than the upstream catalyst **3.** In both the upstream and downstream catalysts **3** and **4,** Pt was supported on the support material by impregnation such that the amount of Pt supported was 2g/L. Hereinafter, "g/L" denotes the amount of substance supported per unit volume L of the support.

### - Comparative example 1 -

The same support material as in Example 1 was supported by 120g/L uniformly on the entire cordierite honeycomb support having 400 cells per square inch (approximately 6.54cm²), 4 mil (approximately 0.1mm) inter-cell wall thickness and 25cm³ volume and Pt was supported on the support material, thereby obtaining a catalyst (oxidation catalyst) of Comparative example 1. The amount of Pt supported in this catalyst is 2g/L.

Therefore, the total amount of active alumina, oxygen storage component (CeO₂), HC adsorbent (β-zeolite) and catalytic metal (Pt) in the catalyst of Comparative example 1 is equal to the total amount thereof in the upstream and downstream catalysts **3** and **4** of Example 1.

### - Example 2 -

Both the upstream catalyst 3 and the downstream catalyst **4** are lean-NOx catalysts. The catalytic material is made of active alumina, CeO₂, barium (Ba) serving as a NOx storage component and platinum (Pt) serving as a catalytic metal. Each catalyst was made by mixing active alumina and CeO₂ in a mass ratio of 1:1 to prepare a support material and supporting Pt and Ba on the support material. As a support for each of the upstream and downstream catalysts **3** and **4** was used a cordierite honeycomb support of the same type as in Example 1.

Further, for the upstream catalyst **3**, the support material obtained by mixing active alumina and CeO₂ in a mass ratio of 1:1 was supported by 60g/L on the honeycomb support. For the downstream catalyst **4**, the same support material was supported by 180 g/L on the honeycomb support. Therefore, the downstream catalyst **4** contains a larger amount of support material per unit area of wall surfaces of each cell in the honeycomb support than the upstream catalyst **3**. In both the upstream and downstream catalysts **3** and **4**, Pt and Ba were supported on the support material by impregnation such that the amounts of Pt and Ba supported were 2g/L and 20g/L, respectively.

### - Comparative example 2 -

The same support material as in Example 2 was supported by 120g/L uniformly on the entire cordierite honeycomb support of the same type as in Comparative example 1 and Pt and Ba were supported on the support material, thereby obtaining a catalyst (lean-NOx catalyst) of Comparative example 2. The amounts of Pt and Ba supported in this catalyst are 2g/L and 20g/L, respectively.

Therefore, the total amount of active alumina, oxygen storage component (CeO₂), catalytic metal (Pt) and NOx storage component (Ba) in the catalyst of Comparative example 2 is equal to the total amount thereof in the upstream and downstream catalysts **3** and **4** of Example 2.

### Evaluation

Each of the catalysts **3** and **4** in Example 1 was aged, and the aged catalysts 3 and **4** and a filter **5** were then attached to a model gas flow reactor in a layout of a catalytic converter **2** shown in Figure **1**. The catalytic converter **2** was allowed to pass a model gas and concurrently gradually increased in gas temperature at the entrance of the upstream catalyst **3** from normal temperature and then measured in terms of the gas temperature at the entrance of the filter **5** and the HC slip rate. The HC slip rate is the rate of HC having slipped through the catalysts **3** and **4** without being oxidized by the catalysts to the total flow of HC.

The aging was implemented by keeping the catalysts at 800°C in a normal atmosphere for 6 hours. The space velocity SV was 100000 h⁻¹, and the rate of temperature rise was 30°C/min. The composition of the model gas was as follows: HC = 4000ppmC, CO = 800ppmC, NO = 1000ppmC, O₂ = 10 volume%, CO₂ = 4.5 volume %, H₂O = 10 volume% and N₂ = the remainder.

Each of the catalysts of Example 2 and Comparative examples 1 and 2 was also aged in the same manner as in Example 1, and a catalytic converter consisting of the aged catalysts and a filter was then measured in terms of the gas temperature at the entrance of the filter and the HC slip rate with a model gas flow reactor using a model gas. The measurement results are shown in Table 1.

**Table 1**

| | Catalyst type | Catalyst entrance gas temperature | HC slip rate | Filter entrance gas temperature |
|---|---|---|---|---|
| Example 1 | Oxidation | 300°C | 24% | 333°C |
| | | 325°C | 2% | 364°C |
| | | 350°C | 1.5% | 386°C |
| Comparative ex. 1 | Oxidation | 300°C | 68% | 284°C |
| | | 325°C | 13% | 342°C |
| | | 350°C | 2.3% | 368°C |
| Example 2 | Lean-NOx | 300°C | 83% | 282°C |
| | | 325°C | 25% | 333°C |
| | | 350°C | 3% | 363°C |
| Comparative ex. 2 | Lean-NOx | 300°C | 95% | 281°C |
| | | 325°C | 60% | 303°C |
| | | 350°C | 11% | 345°C |

A comparison between Example 1 and Comparative example 1 each using an oxidation catalyst shows that at the same catalyst entrance gas temperature, Example 1 exhibits a lower HC slip rate and a higher filter entrance gas temperature than Comparative example 1. In particular, at a low catalyst entrance gas temperature (300°C), Comparative example 1 exhibits a filter entrance gas temperature lower than the catalyst entrance gas temperature while Example 1 exhibits a filter entrance gas temperature 30°C higher than the catalyst entrance gas temperature. On the other hand, a comparison between Example 2 and Comparative example 2 each using a lean-NOx catalyst shows that at the same catalyst entrance gas temperature, Example 2 exhibits a lower HC slip rate than Comparative example 2, and that at the same high catalyst entrance gas temperatures, Example 2 exhibits a higher filter entrance gas temperature than Comparative example 2.

Therefore, if the downstream catalyst **4** has a larger amount of support material than the upstream catalyst **3**, the HC slip rate can be reduced to increase the filter entrance gas temperature, as compared to if the same support material is supported uniformly all over a single honeycomb support as in Comparative examples 1 and 2, even though both the cases do not differ in the total amount of support material from each other. This is advantageous in quickly regenerating the filter while preventing an increase in fuel consumption.

In Example 2 using a lean-NOx catalyst, NO in exhaust gas is oxidized into NO₂ by Pt at lean air-fuel ratios and then stored as barium nitrate in Ba serving as a NOx storage component. Thereafter, when the engine is operated at rich air-fuel ratios, the stored NO₂ is released from the NOx storage component. Therefore, the released NO₂ can be supplied to the filter **5** to burn off particulates.

## Claims

1. An exhaust gas purification system (**1**) for a diesel engine in which a filter (**5**) for trapping particulates in exhaust gas from the engine is disposed in an exhaust passage of the engine and a catalyst for oxidizing HC in exhaust gas is disposed upstream of the filter (**5**) in the exhaust passage, wherein
the catalyst comprises a catalytic layer which is formed on the wall surfaces of each cell of a honeycomb support and contains catalytic metal, active alumina and an oxygen storage component both serving as a support material which supports the catalytic metal, and
part (**4)** of the catalyst downstream in the direction of flow of the exhaust gas is larger than part (**3**) of the catalyst upstream in the direction of flow of the exhaust gas in terms of the amount of the support material per unit area of the wall surfaces of the cells of the honeycomb support.

2. The exhaust gas purification system (**1**) of claim 1, wherein the catalyst is an oxidation catalyst.

3. The exhaust gas purification system (**1**) of claim 1, wherein the catalyst is a lean-NOx catalyst.
